# EUROPÄISCHE PATENTSCHRIFT

(11) **EP 2 070 649 B1**
(45) Veröffentlichungstag und Bekanntmachung des Hinweises auf die Patenterteilung: **25.11.2009**
(21) Anmeldenummer: 08021480.2
(22) Anmeldetag: 11.12.2008
(51) Int. Cl.: B23Q 39/04, B23Q 41/04, B23P 21/00

(54) **Vorrichtung zum Bearbeiten von Profilen**
Device for processing profiles
Appareil de traitement de profilés

(30) Priorität: 13.12.2007 DE 102007060586
(43) Veröffentlichungstag der Anmeldung: 17.06.2009
(73) Patentinhaber: Thorwesten Maschinenbau GmbH, 59269 Beckum (DE)
(72) Erfinder: Luthmann, Christian, 59510 Lippetal (DE)
(74) Vertreter: Schütte, Hartmut

(56) Entgegenhaltungen:
- EP-A- 0 683 297
- EP-A- 0 727 277
- EP-A- 1 559 501
- DE-A1- 10 211 990
- DE-A1- 19 712 082

## Beschreibung

Die Erfindung betrifft eine Vorrichtung zur Bearbeitung von Profilen und insbesondere eine Vorrichtung zur Bearbeitung von Profilen, die wenigstens ein Außenprofil und wenigstens ein Verstärkungsprofil umfassen und zur Fenster- und Türenherstellung vorgesehen sind. Die Außenprofile der zu verarbeitenden Profile bestehen insbesondere aus Kunststoff oder aus Aluminium oder aus einem vergleichbaren leichten Metall, welches sich zum Einsatz an Fenstern und Türrahmen eignet. Möglich sind auch mit Kunststoff beschichtete Aluminium-Außenprofile. Die eingesetzten Verstärkungsprofile bestehen insbesondere aus Metall und können beispielsweise aus einem handelsüblichen Stahl bestehen.

Im Stand der Technik sind Vorrichtungen zur Bearbeitung von Profilen für die Fenster- und Türenherstellung bekannt geworden, bei denen beispielsweise nach dem manuellen Einsetzen des Verstärkungsprofils in das Außenprofil zunächst auf einer separaten Maschine das Außenprofil mit dem Verstärkungsprofil verschraubt wird, um die nötige Stabilität des fertigen Fensters oder dgl. zu gewährleisten.

Nach dem erfolgten Verschrauben werden die Profile zu dem Vorratspuffer einer Bearbeitungsstation verbracht, wo sie anschließend manuell oder automatisch zu einem Bearbeitungswerkzeug verbracht werden, an dem weitere Bearbeitungsschritte durchgeführt werden. Mit der Bearbeitungsstation werden beispielsweise Entwässerungsfräsungen bzw. Entwässerungsbohrungen oder Entlüftungsbohrungen in das Profil eingebracht. Weiterhin werden die nötigen Bohrungen und Fräsungen für z. B. die Schließbleche an einem Blendrahmen eingebracht. Bei Haustüren können die Schließzylinderbohrungen eingebracht werden.

Nach der Bearbeitung an der Bearbeitungsstation werden die Profile bei diesem bekannten Stand der Technik in einem Austragslager zwischengelagert, aus dem sie entnommen werden können, um der weiteren Verarbeitung zugeführt zu werden.

Eine solche bekannte Vorrichtung aus dem Stand der Technik benötigt zwei separate Bearbeitungsmaschinen, nämlich zum einen die Maschine zum Verschrauben des Außenprofils mit dem Verstärkungsprofil und zum anderen die Bearbeitungsmaschine zur Anfertigung der verschiedenen benötigten Bohrungen und Fräsungen.

Deshalb erfordert das bekannte System einen hohen Platzbedarf. Vorteilhaft bei diesem System ist, dass die Bearbeitungsgeschwindigkeit der Bearbeitungsmaschine nicht durch die Bearbeitungsgeschwindigkeit der Verschraubung beeinflusst wird.

Weiterhin ist im Stand der Technik eine Vorrichtung zur Bearbeitung von Profilen bekannt geworden, bei der die Verschraubungseinheit in dem Bereich des Zufuhrmagazins vorgesehen ist, wobei beim getakteten Verfahren des Profils in Richtung auf die Bearbeitungsmaschine das Profil an den zur Verschraubung vorgesehenen Stellen gestoppt wird, um dort jeweils eine Verschraubung durchzuführen.

Diese bekannte Vorrichtung hat den Vorteil, dass kein zusätzlicher Platzbedarf zum Verschrauben vorgesehen werden muss. Insbesondere verdoppelt sich der Platzbedarf nicht nahezu, wie es in dem vorgeschriebenen Stand der Technik der Fall war. Nachteilig bei diesem bekannten Stand der Technik ist allerdings, dass die Fertigungsgeschwindigkeit abnimmt, da die Bearbeitungseinrichtung jeweils auf die Verschraubungen warten muss, bis das Profil an die geeignete Bearbeitungsstelle verfahren wird, um dort in der Bearbeitungseinrichtung der gewünschten Bearbeitung unterzogen zu werden.

Weiterhin ist im Stand der Technik eine Vorrichtung zur Bearbeitung von Profilen bekannt geworden, bei der die Verschraubungseinheit im Bereich des Zufuhrmagazins vorgesehen ist. Dazu wird das Zufuhrmagazin etwa doppelt so lang ausgeführt, wie die einzelnen Profile lang sind. Nach dem Einlegen eines zu verschraubenden Profils wird das Rohprofil an der Verschraubungseinheit vorbeigeführt und wie gewünscht verschraubt. Nach beendetem Verschraubungsvorgang erreicht das Profil die Bearbeitungseinrichtung, wo anschließend die nötigen Bearbeitungsschritte durchgeführt werden.

Dabei kann das nächste zu bearbeitende Profil von der Verschraubungseinheit verschraubt werden. Diese bekannte Vorrichtung erlaubt eine Verarbeitungsgeschwindigkeit, bei der die Verarbeitungsgeschwindigkeit der Bearbeitungseinrichtung nicht durch ansonsten unnötige Wartezeiten auf die Verschraubungseinheit beeinflusst wird. Nachteilig ist aber, dass ein etwa doppelt so großes Vorratsmagazin bereitgestellt werden muss, sodass sich die Länge der Bearbeitungsmaschine von z. B. 8 auf etwa 11 m verlängert, was dazu führt, dass in vielen Hallen eine solche Maschine nicht einsetzbar ist.

In Anbetracht des zuvor beschriebenen Standes der Technik ist es die Aufgabe der vorliegenden Erfindung, eine Vorrichtung zur Bearbeitung von Profilen zur Verfügung zu stellen, die eine hohe Bearbeitungsgeschwindigkeit erlaubt, während gleichzeitig ein geringer Platzbedarf benötigt wird.

Die vorliegende Erfindung wird durch eine Vorrichtung mit den Merkmalen des Anspruchs 1 gelöst. Bevorzugte Weiterbildungen der Erfindung sind Gegenstand der Unteransprüche. Weitere vorteilhafte Merkmale ergeben sich aus der Beschreibung der Ausführungsbeispiele.

Die erfindungsgemäße Vorrichtung dient zur Bearbeitung von Profilen und vorzugsweise von Profilen, die ein Außenprofil und ein Verstärkungsprofil umfassen, und die insbesondere zur Fenster- und Türenherstellung vorgesehen sind. Die erfindungsgemäße Vorrichtung umfasst wenigstens ein Zufuhrmagazin zur Aufnahme und Bevorratung der zu bearbeitenden Profile.

Weiterhin ist wenigstens eine Verschraubungseinheit vorgesehen, um Profile mit dem Verstärkungsprofil zu verschrauben. Für die weiteren Bearbeitungsvorgänge ist wenigstens eine mit mehreren Werkzeugen ausgestattete Bearbeitungseinrichtung vorgesehen. Ein Austransportpuffer dient zur Ablage der bearbeiteten Profile.

Erfindungsgemäß sind die Verschraubungseinheit und die Bearbeitungseinrichtung hintereinander angeordnet, sodass die zu bearbeitenden Profile entlang einer gemeinsamen Bearbeitungsachse bearbeitbar sind. Die Verschraubungseinheit ist entlang der Bearbeitungsachse verfahrbar angeordnet, um das zu bearbeitende Profil gleichzeitig mit der Bearbeitungseinrichtung zu bearbeiten.

Die Erfindung hat viele Vorteile. Ein erheblicher Vorteil ist, dass die Verschraubungseinheit und die Bearbeitungseinrichtung gleichzeitig dasselbe Profil bearbeiten, sodass einerseits die Verschraubungseinheit eine Schraube in das zu bearbeitende Profil setzt, während gleichzeitig die Bearbeitungseinrichtung beispielsweise eine Lüftungsbohrung setzt. Dadurch, dass die Verschraubungseinheit entlang der Bearbeitungsachse verfahrbar angeordnet ist, wird ein variabler Abstand einer Verschraubungsposition von einer weiteren Bearbeitungsposition ermöglicht.

Ein bedeutender Vorteil ist, dass die Verschraubungseinheit unabhängig von der Bearbeitungseinrichtung verfahren werden kann, sodass gleichzeitige Bearbeitungsvorgänge möglich sind. Dadurch steigert sich die Kapazität der erfindungsgemäßen Vorrichtung erheblich. In einem konkreten Beispiel hat die Kapazitat der erfindungsgemäßen Vorrichtung um etwa 20 bis 30 % erhoht. Die genauen Werte hängen von den verwendeten Profilen und von der Art und Größe der eingesetzten Vorrichtung ab und können insbesondere größer als die genannten Zahlenwerte sein. In Einzelfällen sind auch kleinere Steigerungsraten möglich.

Vorzugsweise ist eine gemeinsame Steuereinrichtung vorgesehen, die die Bewegungsabläufe der Verschraubungseinheit und der Bearbeitunaseinrichtung gemeinsam steuert. Die Steuerungseinrichtunq ist insbesondere auch dafür vorgesehen, einzelne Profile aus dem Zufuhrmagazin gezielt einzeln der Verschraubungseinheit und der Bearbeitungseinrichtung zuzuführen.

In einer bevorzugten Weiterbildung sind die Länge des Abtranspcrtpuffers und die Länge des Zufuhrmagazins an die Länge der zu bearbeitenden Profile angepasst. Das bedeutet, dass die Lange insbesondere etwa gleich der Länge der maximal zu verarbeitenden Profile ist. Die Länge des Austränsportpuffers und/oder des Zufuhrmagazins kann dabei etwas größer sein als die Länge der maximal zu verarbeitenden Profile.

In einer weiteren bevorzugten Weiterbildung ist die Verschraubungseinheit nur um einen Bruchteil der Länge der zu bearbeitenden Profile verfahrbar. Eine solche Ausgestaltung ist besonders vorteilhaft, da für die Verschraubungseinheit nur eine geringere Verfahrlänge und ein geringer Platzbedarf benötigt werden. Beispielsweise kann die verfahrbare Länge der Verschraubungseinheit etwa dem maximalen Abstand zweier Verschraubungsstellen der zu verarbeitenden Profile entsprechen.

Wenn beispielsweise der Abstand zweier Verschraubungsstellen 30 cm beträgt, kann der maximale Verfahrweg der Verschraubungseinheit auf 30, 35 oder 40 cm eingestellt werden.

Vorzugsweise ist der verfahrbare Abstand der Verschraubungseinheit etwas größer als der maximale Abstand zweier Verschraubungspositionen.

Es ist möglich und bevorzugt, dass die Verschraubungseinheit um die Hälfte oder um etwa ein Drittel der Länge der zu bearbeitenden Profile verfahrbar ist. Auch andere Bruchteile sind möglich.

In bevorzugten Weiterbildungen aller zuvor beschriebenen Ausgestaltungen ist die Verschraubungseinheit nur um einen Anteil der Länge des Austransportpuffers und/oder des Zufuhrmagazins verfahrbar.

Möglich ist es auch, dass die Verschraubungseinheit um die Hälfte oder um ein Drittel oder um ein Viertel der Länge eines zu verarbeitenden Profils verfahrbar vorgesehen ist. Wenn beispielsweise die Verschraubungseinheit um etwa die Hälfte der Länge verfahrbar vorgesehen ist, kann an jedem Profilende eine Verschraubung durchgeführt werden, während das Profil in Längsrichtung nur einmal versetzt werden muss.

In allen Ausgestaltungen ist die Verschraubungseinheit insbesondere unabhängig von der Bearbeitungseinrichtung steuerbar und verfahrbar. Dann kann die Verschraubungseinheit nach einer ersten erfolgten Verschraubung schon in die nächste vorgesehene Position verfahren werden, in der die nächste Verschraubung erfolgt, während gleichzeitig die Bearbeitungseinrichtung noch den aktuellen Bearbeitungsschritt durchführt. Nach erfolgter Positionierung des Profils in die nächste Bearbeitungsposition kann dann die Verschraubung direkt durchgeführt werden, während die Bearbeitungseinrichtung den nächsten Bearbeitungsvorgang durchführt.

In bevorzugten Weiterbildungen aller zuvor genannten Ausgestaltungen verfügt die Bearbeitungseinrichtung wenigstens über eine Drehkranzeinheit, an der über den Umfang verteilt mehrere Bearbeitungseinheiten angeordnet sind. Beispielsweise können 4, 6, 7 oder 8 Bearbeitungseinheiten vorgesehen sein, die insbesondere symmetrisch über den Umfang verteilt angeordnet sind. Jede Bearbeitungseinheit verfügt insbesondere über einen eigenen Antrieb und ist separat steuerbar. Der Drehkranz ist drehbar gelagert und in jede gewünschte Winkelposition verfahrbar. Der Drehkranz kann von 0 bis 360 Grad verfahrbar sein; es ist aber auch möglich, dass der Drehkranz kontinuierlich drehbar ist, indem die Kontakte beispielsweise über Schleifkontakte zugeführt werden.

Insbesondere ist die Drehkranzeinheit in wenigstens einer Querrichtung quer zur Drehachse der Drehkranzeinheit verfahrbar. Das bedeutet, dass die Drehkranzeinheit innerhalb der Ebene, in der die einzelnen Bearbeitungseinheiten angeordnet sind verfahrbar ist und zwar vorzugsweise in zwei aufeinander etwa senkrecht stehenden Richtungen, sodass mit jeder Bearbeitungseinheit unter jedem gewünschten Winkel jede Position anfahrbar ist.

Beispielsweise kann das ursprünglich senkrecht von oben ausgerichtete Werkzeug an einer Bearbeitungseinheit um 45, 60, 135° oder einen sonstigen Winkel gedreht werden und anschließend durch eine geeignete Verstellung in x- und y Richtung an das Profil herangeführt werden, um dort die nötige Bearbeitung vorzunehmen.

Die Drehkranzeinrichtung kann zusätzlich entlang der Drehachse verfahrbar vorgesehen sein, um beispielsweise das Fräsen von Nuten oder dergleichen an dem zu bearbeitenden Profil zu ermöglichen. Vorzugsweise wird ein Vorschub in z-Richtung aber unabhängig von der Drehkranzeinheit durch den Transport des Profils ermöglicht.

In allen Ausgestaltungen ist es bevorzugt, dass bei der Bearbeitung des Profils das Profil durch wenigstens eine und insbesondere zwei separat voneinander steuerbare Anpressbacken fixiert wird, um eine genau definierte Bearbeitung zu ermöglichen.

In vorteilhaften Weiterbildungen kann wenigstens eine zweite Verschraubungseinheit vorgesehen sein, wobei eine zweite Verschraubungseinheit insbesondere auf der Seite angeordnet ist, die der ersten Verschraubungseinheit gegenüberliegt. So kann von zwei unterschiedlichen Seiten eine gleichzeitige Verschraubung erfolgen. Die beiden Verschraubungseinheiten können in Richtung der Bearbeitungsachse hintereinander angeordnet sein, um eine Beeinträchtigung beim gleichzeitigen Verschrauben auszuschließen.

In anderen Weiterbildungen kann die Verschraubungseinheit Teil einer Drehkranzeinrichtung mit mehreren Werkzeugen sein, wobei dann insbesondere zwei Drehkranzeinrichtungen vorgesehen sind, die axial hintereinander angeordnet sind, um eine gleichzeitige Bearbeitung eines Profils mit den beiden Drehkranzeinrichtungen zu ermöglichen. Dann ist es bevorzugt, das die erste Drehkranzeinrichtung vorzugsweise die nötigen Verschraubungen durchführt, während die zweite Drehkranzeinrichtung die weiteren Bearbeitungsschritte absolviert. Zu Zeiten, wenn keine Verschraubung mit der Verschraubungseinheit der ersten Drehkranzeinrichtung erforderlich ist, kann die erste Drehkranzeinrichtung auch andere Bearbeitungsschritte durchführen.

Die Erkennung einzelner Profile und die Steuerung der erfindungsgemäßen Vorrichtung können beispielsweise erfolgen, in dem an den einzelnen Profilen ein Strichcode vorgesehen wird, der mittels eines Scanners einlesbar ist, sodass der Steuerungseinrichtung die Daten über das zu verarbeitende Profil zu Verfügung gestellt werden.

In anderen Ausgestaltungen ist es auch möglich, dass anstelle eines Strichcodes oder zusätzlich dazu ein Transponder vorgesehen ist, um ein anderes berührungsloses Auslesen der erforderlichen Informationen zur Verfügung zu stellen.

Nach dem Transport eines Profils zur Bearbeitungsachse ergreift ein an der Vorrichtung vorgesehener Greifer vorzugsweise das Profil und führt es entlang der Bearbeitungsachse zu der Verschraubungseinheit und zu der Bearbeitungseinrichtung. Der Greifer kann mit einer Zange versehen sein, um das Ende des Profils zu ergreifen.

Es ist möglich, dass nicht nur ein Verstärkungsprofil automatisch oder manuell in das zu verarbeitende Profil eingesteckt wird, sondern dass auch mehrere Verstärkungsprofile in beispielsweise unterschiedliche Hohlkammern des Außenprofils eingeführt werden.

In allen Ausgestaltungen weist die Verschraubungseinheit insbesondere eine automatische Schraubenzufuhr auf, um eine Vielzahl von Verschraubungen ohne manuellen Eingriff zu ermöglichen.

Die Zangeneinrichtung des Greifers ist insbesondere frei programmierbar, um alle möglichen Positionen eines Profils anfahren zu können.

Weitere Vorteile und Merkmale ergeben sich aus dem Ausführungsbeispiel, das nun mit Bezug auf die beiliegenden Figuren erläutert wird.

### In den Figuren zeigen:

- Fig. 1: eine stark schematische Aufsicht auf eine erfindungsgemäße Vorrichtung zur Bearbeitung von Profilen;
- Fig. 2: die Bearbeitungseinrichtung und die Verschraubungseinheit der Vorrichtung nach Fig. 1 in einer vergrößerten perspektivischen Ansicht;
- Fig. 3: ein Profil zur Bearbeitung mit der Vorrichtung nach Fig. 1;
- Fig. 4: einen Profilquerschnitt des Profils nach Fig. 3; und
- Fig. 5: einen alternativen Aufbau der Vorrichtung nach Fig. 1.

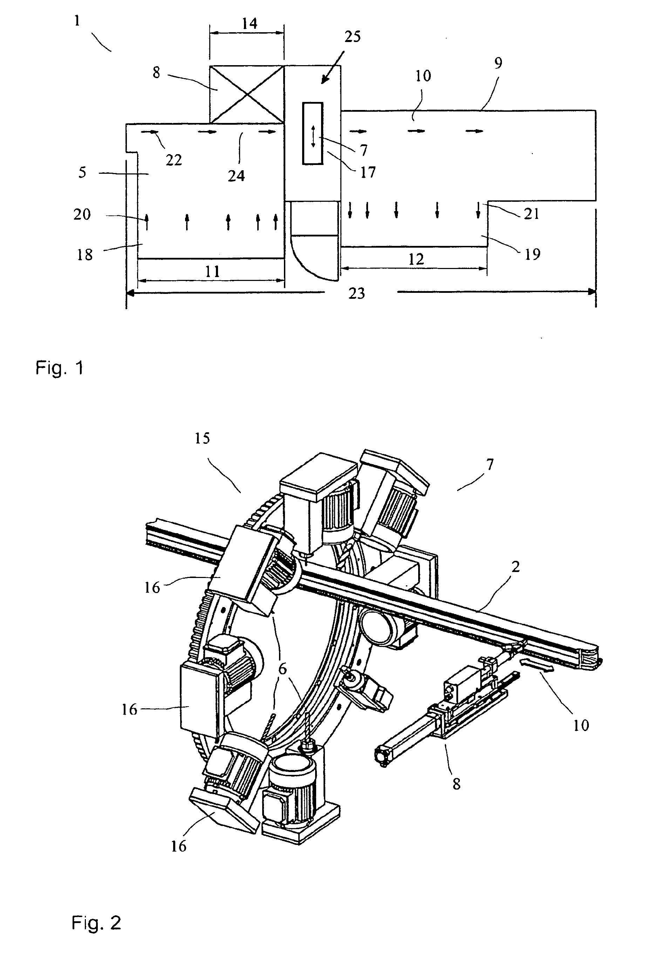

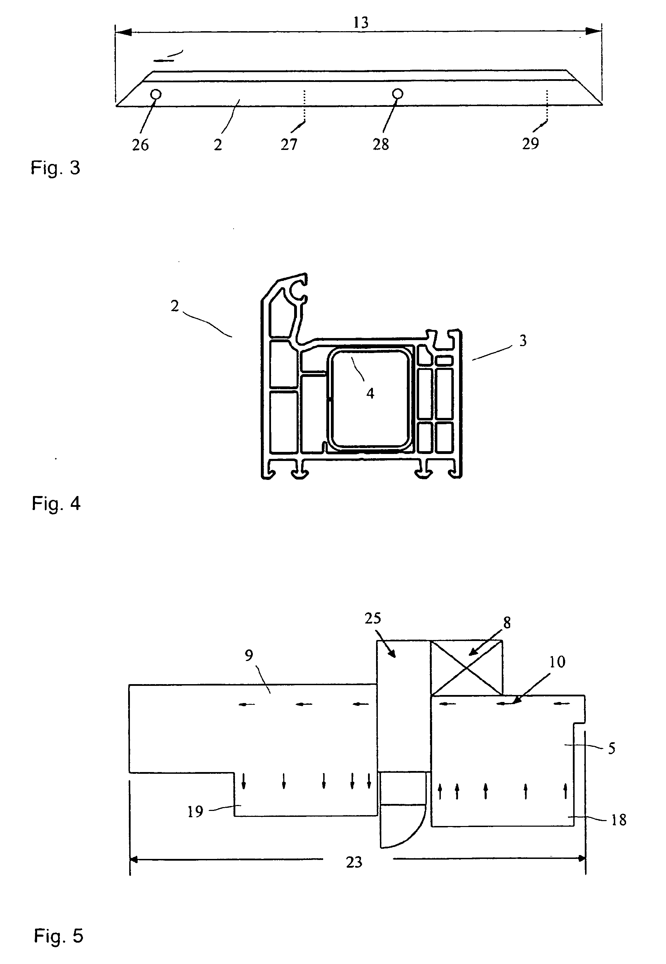

Mit Bezug auf die Figuren 1 bis 3 wird im Folgenden ein erstes Ausführungsbeispiel einer erfindungsgemäßen Vorrichtung 1 beschrieben. In einer alternativen Ausgestaltung ist die Vorrichtung in Fig. 5 in einer stark schematischen Aufsicht dargestellt.

Mit Bezug auf die Figuren 1 bis 3 wird im Folgenden ein erstes Ausführungsbeispiel einer erfindungsgemäßen Vorrichtung beschrieben, bei dem das als Zufuhrmagazin bzw. Zutransporttisch 5 ausgeführte Zufuhrmagazin in der Aufsicht links vorgesehen ist, während der als Abtransporttisch 9 vorgesehene Austransportpuffer auf der rechten Seite angeordnet ist. Zwischen dem Zutransporttisch 5 und dem Abtransporttisch 9 ist der Bearbeitungsbereich 25 vorgesehen, an dem die Bearbeitungseinrichtung 7 angeordnet ist.

Hier im Ausführungsbeispiel werden die zu bearbeitenden Profile 2 an der Profilaufgabe 18 auf den Zutransporttisch 5 aufgelegt und nach Bedarf automatisch in Richtung der Transportrichtung 20 auf die Bearbeitungsachse 10 zugeführt, wo sie von einer nicht dargestellten Greifereinrichtung ergriffen werden, um die Profile 2 definiert entlang der Bearbeitungsachse 10 zu der Verschraubungseinheit 8 und der Bearbeitungseinrichtung 7 zu transportieren.

Zur Bearbeitung werden die Profile 2 entlang der Bearbeitungsachse 10 in die Transportrichtung 22 transportiert, bis eine erste Verschraubungsstelle den Verschraubungsbereich 24 erreicht, wo die Verschraubungseinheit 8 angeordnet ist. Die Verschraubungseinheit 8 ist hier im Ausführungsbeispiel um eine verfahrbare Länge 14 verfahrbar angeordnet, um einen variablen Abstand zwischen der Verschraubungseinheit 8 und der Bearbeitungseinrichtung 7 zu ermöglichen, sodass ein Werkzeug 6 der Bearbeitungseinrichtung 7 und die Verschraubungseinheit 8 gleichzeitig an demselben Profil 2 unterschiedliche Bearbeitungsgänge vornehmen können.

Die verfahrbare Länge 14 kann unterschiedlich sein und auch gleich der Länge des Zufuhrmagazins 11 sein. In der Regel ist die verfahrbare Länge 14 aber aus Kostengründen kürzer und liegt insbesondere in dem Bereich zwischen einem Fünftel und der Hälfte der Länge 11 des Zufuhrmagazins 11. Hier im Ausführungsbeispiel beträgt die verfahrbare Länge 14 etwa 650 mm und damit ungefähr ein Viertel der Länge des Zufuhrmagazins 11, die hier 2,5 m beträgt. Die Länge des Zufuhrmagazins 11 liegt regelmäßig zwischen etwa 0,5 m und 4 m und vorzugsweise bei etwa 2,5 m, kann aber auch noch länger sein. Die Länge 12 des Austransportpuffers liegt üblicherweise ebenfalls zwischen etwa 0,5 m und 4 m, kann aber auch insbesondere größer sein.

Nach der ersten Verschraubung wird das Profil 2 weiter entlang der Bearbeitungsachse 10 in die Transportrichtung 22 befördert, bis beispielsweise eine Belüftungsbohrung an dem Profil 2 hergestellt werden muss. Eine solche Bohrung wird von einem Werkzeug 6 der Bearbeitungseinrichtung 7 hergestellt, während gleichzeitig die Verschraubungseinheit 8 in einem entsprechenden Abstand positioniert werden kann, um gleichzeitig mit der Herstellung der Bohrung-eine weitere Schraube in das Profil 2 einzuschrauben.

Nach dem Abschluss der Bearbeitung wird das Profil 2 entlang der Transportrichtung 21 zur Profilentnahme 19 befördert, wo das Profil 2 zwischengelagert wird, bis es entnommen wird.

Im Stand der Technik musste die Bearbeitungseinrichtung die nächste Verschraubung abwarten. Mit der erfindungsgemäßen Vorrichtung wird ein gleichzeitiges Bearbeiten und Verschrauben ermoglicht, sodass eine erhebliche Leistungssteigerung moglich ist, die im Regelfall über 10 Prozent liegt und 20, 30 oder noch mehr Prozente erreichen, kann. Die genaue Leistungssteigerung hängt vom Einzelfall ab und hängt insbesondere davon ab, wie häufig die Wartezeiten der Bearbeitungseinrichtung 7 sind.

Die Gesamtlänge 23 beträgt 8 m und ist durch die höhere Verarbeitungsgeschwindigkeit nicht verlängert worden, da der verfahrbare Bereich 25 der Verschraubungseinheit 8 innerhalb der Länge des Zufuhrmagazins 5 liegt.

Die Bearbeitungseinrichtung ist in einer perspektivisch vergrößerten Darstellung in Figur 2 dargestellt. Die Bearbeitungseinrichtung 7 umfasst eine Drehkranzeinheit 15, die hier um 360° drehbar angeordnet ist. Weiterhin ist die Drehkranzeinheit in zwei zueinander senkrechten Richtungen jeweils axial verschiebbar angeordnet, derart, dass die Drehkranzeinheit senkrecht zu ihrer Drehachse in der Ebene verschiebbar vorgesehen ist. So ist die Drehkranzeinheit 15 in der Querrichtung 17 verschiebbar bzw. verfahrbar vorgesehen. Außerdem kann die Drehkranzeinheit 15 auch in der Höhe verfahren werden. Dadurch wird es ermöglicht, dass jedes Werkzeug 6 der unterschiedlichen Bearbeitungseinheiten 16 der Drehkranzeinheit 15 an jede beliebige Position unter jedem beliebigem Winkel zum Profil 2 bringbar ist.

Wenn beispielsweise mit einem ersten Werkzeug eine kleine Bohrung unter 20° vorgenommen werden soll und mit einem zweiten Werkzeug eine größere Bohrung unter einem Winkel von 340°, so wird die Drehkranzeinheit entsprechend gedreht und in x- und y Richtung verfahren, um dem jeweiligen Werkzeug unter dem jeweiligen Winkel die Bearbeitung zu ermöglichen.

Durch die drehbare und fahrbare Anordnung der Drehkranzeinheit 15 wird eine äußerst flexible und vielseitige Bearbeitung der Profile 2 ermöglicht. Hier im Ausführungsbeispiel sind acht unterschiedliche Werkzeuge an der Drehkranzeinheit vorgesehen. In anderen Ausgestaltungen können auch nur 3, 4, 5, 6 oder 7 unterschiedliche Werkzeuge vorgesehen sein. Es ist auch möglich, eine noch größere Anzahl an Werkzeugen anzuordnen. Vorzugsweise weist jedes Werkzeug einen eigenen Antrieb auf, um eine separate Ansteuerung der einzelnen Werkzeuge zu ermöglichen.

In Fig. 2 ist weiterhin die Verschraubungseinheit 8 schematisch dargestellt, die in der etwa horizontalen Ebene auf das Profil zu bewegbar ist, um einen Eingriff der Schraubereinheit in das Profil zu ermöglichen. Des Weiteren ist die Verschraubungseinheit 8 auch in Richtung der Bearbeitungsachse 10 verfahrbar angeordnet, um bei der Bearbeitung eines Profils 2 unterschiedliche Abstände zwischen der Bearbeitungseinrichtung 7 und der Verschraubungseinheit 8 zu ermöglichen.

In Fig. 3 ist ein Beispiel eines einfachen Profils 2 dargestellt, welches mit zwei Bohrungen an Bohrungsstellen 26 und 28 und zwei Verschraubungen an Verschraubungsstellen 27 und 29 versehen werden soll. Die erfindungsgemäße verfahrbare Verschraubungseinheit 8 ermöglicht es, dass zeitgleich mit der ersten Verschraubung 27 die Bohrung 26 von der Bearbeitungseinrichtung 7 hergestellt wird, während nach entsprechendem Vorschub des Profils die Bohrung 28 und die Verschraubung 29 wiederum zeitgleich hergestellt werden.

Dies wird nicht nur bei gleichen Abständen sondern auch bei unterschiedlichen Abständen ermöglicht, da die Verschraubungseinheit 8 entsprechend verfahrbar vorgesehen ist, sodass unterschiedliche Abstände zwischen der Bearbeitungseinrichtung 7 und der Verschraubungseinheit 8 ermöglicht werden.

In Fig. 4 ist ein Querschnitt durch ein mögliches zu verarbeitendes Profil dargestellt, bei dem das Außenprofil 3 aus Kunststoff besteht und mehrere Hohlkammern aufweist, die insbesondere zur Wärmeisolierung dienen, um die nötige Stabilität zu erhalten, ist des Weiteren ein Verstärkungsprofil 4 in einer zentralen Hohlkammer des Profils 2 angeordnet, um das Rahmenprofil des Fensters oder der Tür zu versteifen.

Eine schematische Aufsicht auf ein anderes Ausführungsbeispiel zeigt Fig. 5, in der der Zutransporttisch 5 auf der von oben gesehenen rechten Seite angeordnet ist, während der Austransportpuffer bzw. Abtransporttisch 9 auf der linken Seite vorgesehen ist. Das bedeutet hier, dass auch die Verschraubungseinheit 8 auf der rechten Seite vorgesehen ist.

Grundsätzlich möglich ist allerdings auch die Anordnung der Verschraubungseinheit auf der Seite des Abtransporttisches.

### Bezugszeichenliste

- 1: Vorrichtung
- 2: Profil
- 3: Außenprofil
- 4: Verstärkungsprofil
- 5: Zufuhrmagazin
- 6: Werkzeug
- 7: Bearbeitungseinrichtung
- 8: Verschraubungseinheit
- 9: Austransportpuffer
- 10: Bearbeitungsachse
- 11: Länge des Zufuhrmagazins
- 12: Länge des Austransportpuffers
- 13: Länge des Profils
- 14: verfahrbare Länge
- 15: Drehkranzeinheit
- 16: Bearbeitungseinheit
- 17: Querrichtung
- 18: Profilaufgabe
- 19: Profilentnahme
- 20: Transportrichtung
- 21: Transportrichtung
- 22: Transportrichtung
- 23: Gesamtlänge
- 24: Verschraubungsbereich
- 25: Bearbeitungsbereich
- 26: Bohrungsstelle
- 27: Verschraubungsstelle
- 28: Bohrungsstelle
- 29: Verschraubungsstelle

## Patentansprüche

1. Vorrichtung (1) zur Bearbeitung von Profilen (2), insbesondere von ein Außenprofil (3) und ein Verstarkungsprofil (4) umfassenden Profilen zur Fenster- und Türenherstellung,
mit einem Zufuhrmagazin (5) zur Aufnahme und Bevorratung der zu bearbeitenden Profile (2),
mit wenigstens einer mit mehreren Werkzeugen (6) ausgestatteten Bearbeitungseinrichtung (7)
und mit einer Verschraubungseinheit (8),
sowie mit einem Austransportpuffer (9) zur Ablage der bearbeiteten Profile (2),
**dadurch gekennzeichnet,**
**dass** die Verschraubungseinheit (8) und die Bearbettungseinrichtung (7) hintereinander angeordnet sind und die zu bearbeitenden Profile (2) entlang einer gemeinsamen Bearbeitungsachse (10) bearbeiten, wobei die Verschraubungseinheit (8) entlang der Bearbeitungsachse (10) verfahrbar angeordnet ist, um das zu bearbeitende Profil (2) gleichzeitig mit der Bearbeitungseinrichtung (7) zu bearbeiten.

2. Vorrichtung (1) nach Anspruch 1, wobei die Länge (11) des Austranspcrtpuffers (9) und die Länge (12) des Zufuhrmagazins (5) an die Länge (13) der zu bearbeitenden Profile (2) angepasst ist.

3. Vorrichtung (1) nach Anspruch 1 oder 2, wobei die Verschraubungseinheit (8) nur um einen Bruchteil der Länge (13) der zu bearbeitenden Profile (2) verfahrbar ist.

4. Vorrichtung (1) nach einem der vorhergehenden Ansprüche, wobei die Verschraubungseinheit (8) nur um einen Anteil der Länge (11) des Austransportpuffers (9) und/oder des Zufuhrmagazins (5) verfahrbar ist.

5. Vorrichtung (1) nach einem der vorhergehenden Ansprüche, wobei die Verschraubungseinheit (8) unabhängig von der Bearbeitungseinrichtung (7) steuerbar und verfahrbar ist.

6. Vorrichtung (1) nach einem der vorhergehenden Ansprüche, wobei die Bearbeitungseinrichtung (7) wenigstens eine Drehkranzeinheit (15) umfasst, an der über dem Umfang verteilt mehrere Bearbeitungseinheiten (16) angeordnet sind.

7. Vorrichtung (1) nach dem vorhergehenden Anspruch, wobei die Drehkranzeinheit (15) in wenigstens eine Querrichtung (17) quer zur Drehachse der Drehkranzeinheit (15) verfahrbar ist.

8. Vorrichtung (1) nach einem der vorhergehenden Ansprüche, wobei wenigstens eine zweite Verschraubungseinheit (8) vorgesehen ist.

9. Vorrichtung (1) nach dem vorhergehenden Anspruch, wobei die beiden Verschraubungseinheiten (8) gegenüberliegend angeordnet sind.

10. Vorrichtung (1) nach einem der beiden vorhergehenden Ansprüche, wobei die beiden Verschraubungseinheiten (8) in Richtung der Bearbeitungsachse (10) hintereinander angeordnet sind.

11. Vorrichtung (1) nach einem der vorhergehenden Ansprüche, wobei die Verschraubungseinheit (8) Teil einer Drehkranzeinrichtung mit mehreren Werkzeugen ist.

## Claims

1. Apparatus (1) for machining profiles (2), in particular profiles for manufacturing windows and doors comprising an external profile (3) and a stiffening profile (4),
having a feed magazine (5) for receiving and storing the profiles (2) to be machined,
having at least one machining device (7) equipped with multiple tools (6)
and having a screw-fastening unit (8),
and having an off-loading buffer (9) for depositing the machined profiles (2),
**characterized in**
**that** the screw-fastening unit (8) and the machining device (7) are positioned in succession, machining the profiles (2) to be machined along a common machining axis (10), wherein the screw-fastening unit (8) is positioned to be displaceable along the machining axis (10) so as to machine the profile (2) to be machined together with the machining device (7).

2. The apparatus (1) according to claim 1, wherein the length (11) of the off-loading buffer (9) and the length (12) of the feed magazine (5) are matched to the length (13) of the profiles (2) to be machined.

3. The apparatus (1) according to claim 1 or 2, wherein the screw-fastening unit (8) is displaceable only by a fraction of the length (13) of the profiles (2) to be machined.

4. The apparatus (1) according to any of the preceding claims, wherein the screw-fastening unit (8) is displaceable only by a portion of the length (11) of the off-loading buffer (9) and/or the feed magazine (5).

5. The apparatus (1) according to any of the preceding claims, wherein the screw-fastening unit (8) is controllable and displaceable independently of the machining device (7).

6. The apparatus (1) according to any of the preceding claims, wherein the machining device (7) comprises at least one star unit (15) which has multiple machining units (16) positioned at intervals over its circumference.

7. The apparatus (1) according to the preceding claim, wherein the star unit (15) is displaceable at least in one transverse direction (17) transverse to the rotational axis of the star unit (15).

8. The apparatus (1) according to any of the preceding claims, wherein at least a second screw-fastening unit (8) is provided.

9. The apparatus (1) according to the preceding claim, wherein the two screw-fastening units (8) are positioned opposite one another.

10. The apparatus (1) according to any of the two preceding claims, wherein the two screw-fastening units (8) are positioned in succession in the direction of the machining axis (10).

11. The apparatus (1) according to any of the preceding claims, wherein the screw-fastening unit (8) is part of a star device having multiple tools.

## Revendications

1. Centre (1) d'usinage pour profilés (2), en particulier pour profilés comprenant un profilé extérieur (3) et un profilé de renforcement (4) pour la construction de fenêtres et de portes,
muni d'un chargeur de profilés (5) pour la réception et l'alimentation des profilés à usiner (2),
pourvu d'au moins un dispositif d'usinage (7) équipé de plusieurs outillages (6) et d'une unité de vissage (8) ainsi que d'un butoir de sortie (9) pour le dépôt des profilés usinés (2),
**caractérisé en ce que**
l'unité de vissage (8) et le dispositif d'usinage (7) sont disposés l'un derrière l'autre et qu'ils usinent les profilés à usiner (2) le long d'un axe commun d'usinage (10), tandis que l'unité de vissage (10) est déplaçable de telle sorte que le profilé à usiner (2) puisse être usiné parallèlement par le dispositif d'usinage (7).

2. Centre d'usinage (1) selon la revendication 1, tandis que la longueur (11) du butoir de sortie (9) et la longueur (12) du chargeur de profilés (5) sont adaptées à la longueur (13) des profilés (2) à usiner.

3. Centre d'usinage (1) selon la revendication 1 ou 2, tandis que l'unité de vissage (8) n'est déplaçable que d'une fraction de la longueur (13) des profilés (2) à usiner.

4. Centre d'usinage (1) selon l'une quelconque des revendications précédentes, tandis que l'unité de vissage (8) n'est déplaçable que d'une partie de la longueur (11) du butoir de sortie (9) et/ou du chargeur de profilés (5).

5. Centre d'usinage (1) selon l'une quelconque des revendications précédentes, tandis que l'unité de vissage (8) est contrôlable et déplaçable indépendamment du dispositif d'usinage (7).

6. Centre d'usinage (1) selon l'une quelconque des revendications précédentes, tandis que le dispositif d'usinage (7) comprend au moins une couronne pivotante (15) équipée de plusieurs unités d'usinage (16) réparties le long de sa circonférence.

7. Centre d'usinage (1) selon la revendication précédente, tandis que la couronne pivotante (15) est déplaçable au moins transversalement (17) par rapport à l'axe de rotation de la couronne pivotante (15).

8. Centre d'usinage (1) selon l'une quelconque des revendications précédentes, tandis qu'est prévue au moins une deuxième unité de vissage (8).

9. Centre d'usinage (1) selon la revendication précédente, tandis que les deux unités de vissage (8) sont disposées en face l'une de l'autre.

10. Centre d'usinage (1) selon l'une quelconque des deux revendications précédentes, tandis que les deux unités de vissage (8) sont disposées l'une derrière l'autre sur l'axe d'usinage (10).

11. Centre d'usinage (1) selon l'une quelconque des revendications précédentes, tandis que l'unité de vissage (8) fait partie d'un dispositif de couronne pivotante à plusieurs outillages.
